(19) Europäisches Patentamt
European Patent Office
Office européen des brevets

(11) Publication number: **0 251 564 B1**

(12) # EUROPEAN PATENT SPECIFICATION

(45) Date of publication of patent specification: **27.02.91** (51) Int. Cl.$^5$: **B01J 29/32**, C10G 35/095

(21) Application number: **87305348.2**

(22) Date of filing: **16.06.87**

(54) **Extruded zeolite catalysts.**

(30) Priority: **30.06.86 US 880087**

(43) Date of publication of application:
**07.01.88 Bulletin 88/01**

(45) Publication of the grant of the patent:
**27.02.91 Bulletin 91/09**

(84) Designated Contracting States:
**BE DE FR GB NL SE**

(56) References cited:
**EP-A- 0 145 289**
**DE-A- 2 639 285**
**US-A- 4 046 713**
**US-A- 4 458 025**
**US-A- 4 507 396**

(73) Proprietor: **EXXON RESEARCH AND ENGINEERING COMPANY**
**P.O.Box 390, 180 Park Avenue**
**Florham Park, New Jersey 07932(US)**

(72) Inventor: **Trowbridge, Theodore Daboll**
**14 Knollwood Avenue**
**Madison New Jersey 07940(US)**

(74) Representative: **Northover, Robert Frank et al**
**Exxon Chemical Limited Exxon Chemical Technology Centre PO Box 1**
**Abingdon Oxfordshire, OX13 6BB(GB)**

**EP 0 251 564 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

FIELD OF THE INVENTION

This invention relates to a novel extruded catalyst comprising a type L zeolite, a catalytically active Group VIII metal which is highly dispersed throughout the zeolite and an alumina binder. The binder is formed in a particular ratio of an acidic alumina sol and boehmite alumina. This catalyst is suitable for use as a reforming catayst and particularly useful in the production of benzene.

BACKGROUND OF THE INVENTION

This invention is drawn to a catalyst used in reforming and aromatization reactions. It may be used in processes for producing reformates from naphtha streams or alternatively the process of use may entail production of aromatics such as benzene or alkyl benzenes from suitable feedstocks.

Since the advent of higher compression automobile and aircraft gasoline engines in the late 1930's and 40's, the demand for higher octane gasoline has continually risen. For the past many years, this octane requirement has been supplied by the addition of various organo-lead compounds or other similar compounds to mixtures of various hydrocarbons. However, because of the wide-spread use of catalytic converters and the removal of various undesirable components from the the exhaust gases of automobiles, other methods of improving motor gasoline octane have become more important. One such method of improving the octane of straight run gasoline fractions is via the use of catalytic reforming.

Catalytic reforming is a commonly practiced process in the petroleum industry. It refers to the treatment of various naphtha fractions to improve their octane rating via the conversion to aromatics. The more important hydrocarbon reactions occuring during the reforming operation include the dehydrocyclization of linear alkanes to aromatics, the dehydrogenation of cycloalkanes to aromatics, and the dehydroisomerization of alkylcyclopentanes to aromatics. A number of other reactions also occur, such as the isomerization of paraffins and the hydrocracking of various hydrocarbons to produce lighter gaseous products. Hydrocracking is generally to be minimized during reforming since it decreases the yield of the more valuable aromatics and produces hydrocarbons of lower economic value such as methane, ethane and propane.

Catalysts which are suitable for reforming processes must possess a wide variety of chemical and physical characteristics. The catalyst must be able to produce highly aromatic liquid products in high yields. The aromatic hydrocarabons must be in concentrations that produce high octane motor fuels. The catalyst should produce low yields of lighter gaseous hydrocarbons. The catalyst should be of a form which may be cheaply manufactured. The catalyst should have high activity and should be regenerable with relative ease as time goes on. The catalyst should possess good crush strength and have a high attrition resistance so that it may be loaded into reaction vessels with a minimal loss of catalyst macrostructure to physical breakage. Significant physical breakdown of the catalyst in the reactor can increase the reaction gas pressure drop through the catalyst bed, thereby increasing the operating cost and possibly reducing catalyst performance in terms of product yield and selectivity.

The use of catalysts containing platinum, with or without the addition of other promoter metals such as rhenium, have been used for some time. These metals are often supported on alumina or silica-alumina. The benzene and alkylbenzene products are among the most important of those produced by the catalytic reforming process in that they have the highest octane number when used in motor fuel.

Additionally, platinum-based catalysts have been used in the dehydrocyclization of hexane and heptane to produce benzene and alkylbenzenes having utility in the chemical industry. Various catalysts have been suggested for use in the reforming process and include those mentioned above as well as catalysts based on the use of the Group VIII noble metals on zeolites.

While zeolite L catalysts have been employed for catalytic dewaxing and in other applications, they are particularly useful in reforming because they decrease the amount of hydrocracking which occurs during reforming. For example, U.S. Patents 4,104,320; 4,417,083; 4,416,806 and British Application 2106413 to Bernard et al. disclose the use of zeolite L as a support which increases the selectivity of the reaction for producing aromatic products and also disclose processes for using the zeolite L and methods for its regeneration. Catalysts comprising platinum-potassium type L zeolites have been disclosed in U.S. Patent No. 4,552,856 to Tauster et al. and U.S. Patent No. 4,544,539 issued to Wortel which discloses an improved cylindrical zeolite L aromatization catalyst.

Generally, it is known in the art to use alumina as a binder or support for type L zeolite reforming catalysts. For instance, U.S. Patent No. 4,458,025 to Lee et al., U.S. Patent No. 4,517,306 to Buss and its

divisional U.S. Patent No. 4,447,316 both make such a suggestion. Lee et al., suggest extrusion of a type L zeolite in alumina.

Other relevant disclosures include Gladrow et al., U.S. Patent No. 3,326,818, which discloses a catalyst composition made up of a crystalline aluminosilicate and a binder prepared by mixing the crystalline aluminosilicate in a minor amount of dry inorganic gel binding agent, such as alumina, containing a minor amount of a peptizing agent. The peptizing agent was said to enhance the strength of the resulting product.

Young et al., U.S. Patent No. 3,557,024, discloses alumina bound catalysts which are to be used in hydrocracking processes. The catalyst composition is formed by mixing one of a number of zeolites, including zeolite L, with a binder consisting of hydrous boehmitic alumina acidified with at least 0.5 mole equivalent of a strong acid per mole of alumina. A catalyst having enhanced strength is said thus to be formed.

Mitsche et al., U.S. Patent No. 4,046,713, suggests a method for preparing an extruded catalyst composition and acidic alumina hydrosol is admixed with a dry mixture consisting essentially of a finely divided alumina, preferably a hydrate, and a finely divided crystalline aluminosilicate such as mordenite. The resulting mixture is extruded, dried and calcined to form a catalyst said to be useful in the reforming of various naphthas. However, the aluminosilicate comprises only up to 20% of the mixture.

U.S. Patent Nos. 4,305,810; 4,305,811; 4,306,963; and 4,311,582 to Johnson and Johnson et al. are directed to stabilized reforming catalysts which are halide promoted. Each of the catalysts is produced by employing a modified alumina support whose alumina precursor comprises at least about 75% by weight boehmite.

None of the cited material teaches or suggests a reforming/dehydrocyclization catalyst of the composition shown herein having the particular two-component alumina binder provided in accordance with the present invention.

## SUMMARY OF THE INVENTION

In accordance with the present invention, there has been discovered a catalyst composition comprising a catalytically-active Group VIII metal dispersed onto an extruded catalyst substrate comprising a type L zeolite and a two-component alumina binder, the binder being a mixture of boehmitic alumina and an acidic alumina sol, the binder being present in an amount of 15 to 35%, preferably about 25 to 30%, by weight of the substrate, the boehmitic alumina comprising about 3 to 21% by weight of said substrate and the sol comprising 6 to 25% by weight of the substrate, said percentages referring to the percent alumina on an anhydrous basis.

## DESCRIPTION OF THE PREFERRED EMBODIMENTS

The type L zeolite-based catalyst substrate of this invention is made by extruding a particular mixture of the zeolite, boehmitic alumina, and alumina sol. The resulting catalyst substrate has a wide range of desirable physical characteristics such as superior crush strength, attrition resistance, hexane adsorption and specific surface area. The catalyst substrate is prepared first by intimately mixing a dry boehmitic alumina with an alumina sol prior to mixing the resulting aggregate with a dry zeolite L. By combining the two alumina sources first, the sol appears to peptize the dry boehmitic alumina such that a uniform binding material is produced. It is believed that when the two dry solids (zeolite and boehmite) are mixed first together and then the sol added to the mixture, the two different dry solids compete for the added sol, thereby permitting a non-uniform distribution of the sol. Mate rials made in the latter fashion have inferior physical and on-oil catalytic performance properties.

In any event, after the alumina mix and zeolite are mixed together to form a material of toothpaste-like consistency, it is extruded through a die to yield the catalyst substrate extrudate. The consistency of the mixture is controlled by controlling the moisture level, which is maintained at about 35 to 40% by weight by drying the admixture to this level of moisture prior to extrusion. The mixture is extruded through a die to yield the catalyst substrate extrudate. The die may be of circular form, although in some instances cross sectional shapes such as three or four-leaf clovers or trilobes may be desired.

The extruded catalyst substrate is then dried in warm air at a temperature of about 120 °C for about one hour. This drying step is then followed by a calcination step at a temperature of about 500 °C for about three hours. Calcination completes the bonding process in forming the particles into a single coherent mass and, as will be seen later, apparently provides some interaction between the binding alumina and the zeolite

constituent. As is known in the art, calcination will change the physical structure of the alumina principally to gamma-alumina crystal form.

After the calcination is complete, the catalyst substrate extrudates are allowed to cool. After reaching room temperature, the extrudates are impregnated with a Group VIII metal, preferably platinum, to form the final catalyst composition. The zeolite preferably is impregnated with an ammino-platinum salt in the method disclosed in U.S. Patent No. 4,568,656 to Poeppelmeier et al.

The catalyst is then again dried and calcined at a low temperature in air to prevent substantial agglomeration of the platinum particles outside the zeolite pores, as disclosed in U.S. Patent 4,568,656.

The catalyst is then ready to be loaded into a reforming or aromatization reactor. Once the catalyst is placed in the reactor, it becomes desirable to perform a pre-dispersion procedure to enhance the activity and long-term stability of the catalyst by performing an oxychlorination procedure. A particularly suitable technique is found in European Patent Application No. 84-307762.9.

In that procedure the catalyst is desirably subjected to: (a) a wet hydrogen treat at a temperature of about 380 to 540 °C; (b) a wet hydrogen chloride treat in a temperature range of from about 450 to about 530 °C; (c) an oxychlorination at a temperature of from about 480 to 520 °C in the presence of 0.05 to 1% by volume HCl; (d) a wet oxygen treat in the temperature range from 480 to about 520 °C; and (e) a wet reduction in hydrogen. Significant improvements and initial activity and catalyst activity maintenance can be had with practice of this fresh catalyst pretreatment procedure.

The catalyst may then be subjected to the desired chemical reaction. The catalyst may be used in a reforming process, but it is not limited to use in conventional reforming of naphthas derived from petroleum or other sources of hydrocarbons and boiling in the range of about 71 to 216 °C, but may also be used to produce the corresponding aromatic products from any reactant organic compound containing at least 6 carbon atoms, including those which contain reactant functional groups. Examples of reactant compounds suitable for this purpose include paraffins such as n-hexane, n-heptane, n-octane, n-nonane, etc., preferably naphthas boiling in the range of between 71 and 216 °C. Preferred reactions herein are the aromatization of n-hexane to benzene, and heptane to toluene, and n-octane to ethylbenzene and/or xylenes. The compound n-hexane may be present in the feed or produced by isomerization of methylpentanes and methylcyclopentane. Since the catalyst is largely monofunctional and does not promote isomerization without cyclization, feed compounds such as dimethylbutanes are not effective.

Additional reactions where the reforming catalyst may be employed include benzene production from streams such as light naphtha, i.e., a naphtha boiling between about 30 and about 100 °C, high octane gasoline production from naphtha or light virgin naphtha where the endpoint is between $C_7$ and $C_{12}$ inclusive.

The reforming process described above may be carried out under general reforming conditions in the presence of hydrogen at a moderate pressure to favour thermodynamically the aromatization reaction. For the traditional reforming of paraffins to aromatics, the temperature depends on the particular paraffin but for acceptable rate and selectivity preferably ranges from between about 400 and 550 °C, more preferably from 450 to 520 °C at pressures of about 200 KPa to 5 mPa, more preferably about 500 KPa to 5 mPa. If the temperature is much below about 400 °C, the yield of product is quite low, and if the product substantially exceeds about 550 °C, other reactions occur which also diminish the yield of product. The liquid hourly space velocity of this reforming reaction is preferably from about 0.5 to 20 w/w/h, more preferably from one to 10 w/w/h, and the hydrogen to reactant molar ratio is preferably from 2 to 20, more preferably from about 4 to 10.

As was noted above, the catalyst of this invention may be made by first intimately mixing the boehmitic alumina with the acidic alumina sol; mixing the resulting aggregate with a type L zeolite; extruding the mixture through a die; drying the extrudate; calcining the extrudate; impregnating the calcined extrudate with a platinum salt; calcining the material at a low temperature.

The boehmitic alumina, a crystalline alpha alumina monohydrate is sold commercially as powders having particles most preferably in the area of about 50 µm.

Sol aluminas, preferably one which has been peptized with an acid which is decomposed to gaseous products upon calcination, is used in the production of the inventive catalyst. Such acids include nitric acid and hydrochloric acid. Sulfuric acid generally is to be avoided because of the sulfur residue it may leave in the product extrudate. The alumina sol preferably an average particle diameter of about 20 mµm. Preferred in an alumina sol having 20% by weight alumina, a pH of about 4.0 and a viscosity of about 10 centipoises g/cm S.$10^2$, as well as a particle size of 20 mµm. The combination of preferred boehmite and alumina sol particle diameters reduces the potential for pore blockage of the zeolite, which can reduce accessibility of the hydrocarbon feedstock to the catalytically active metal dispersed in the zeolite pores or channels.

The boehmite is added in an amount to provide from 3 to 21% by weight of the catalyst substrate,

preferably from 6 to 8% on an anhydrous basis. The alumina sol is added in an amount of broadly from 6 to 25% by weight of the final catalyst product; but preferably from 20 to 22% by weight alumina by an anhydrous basis. The total of these two aluminas preferably will not exceed about 30% of the total weight of type L zeolite and binder on an anhydrous or dry basis.

After the zeolite is added to the mixed aluminas, the resulting paste is conveyed to an extruder for formulation of the extrudate or, the alumina binder mixture may be added to the zeolite for formation of the extrudable paste. The extruder may form an extrudate catalyst substrate having almost any suitable diameter, although 0.16 cm to 0.48 cm is preferred for ease of handling and high exterior surface to volume ratio.

As noted above, the extrudates may then be calcined at about 500° C.

The Group VIII metals, preferably platinum, may then be introduced to the extrudate in the manner discussed above.

The preferred extrudate catalysts of this invention have a crush strength (ASTM D4179-82) greater than about 0.41 kg per millimeter and preferably greater than 0.56 kg per millimeter. The attrition resistance as measured by the ASTM D4058-81 test is less than about 3.0 wt.%, preferably less than about 2.75 wt.%. The normal hexane adsorption of the catalyst substrate is greater than 5 wt.% based on the zeolite in the composition. This hexane adsorption test is an indication of the extent of zeolite pore blockage which may have been caused by the binder. The specific surface area of the resulting catalyst substrate extrudate is always greater than 250 square meters per gram.

Type L zeolites are generally defined as synthetic zeolites which crystallize in the hexagonal system with a characteristic X-ray diffraction pattern obtained from $CuK_{\alpha}$ radiation with the major d (Å $10^{-10}$m) peak values set out in Table A:

**Table A**

| |
|---|
| 16.1 ± 0.3 |
| 7.52 ± 0.04 |
| 6.00 ± 0.04 |
| 4.57 ± 0.04 |
| 4.35 ± 0.04 |
| 3.91 ± 0.02 |
| 3.47 ± 0.02 |
| 3.28 ± 0.02 |
| 3.17 ± 0.01 |
| 3.07 ± 0.01 |
| 2.91 ± 0.01 |
| 2.65 ± 0.01 |
| 2.46 ± 0.01 |
| 2.42 ± 0.01 |
| 2.19 ± 0.01 |

Thus, they share a common zeolitic structure. For purposes of this invention, type L zeolites have a general formula as follows:

$$0.9\text{-}1.3\ M_{2/n}O:Al_2O_3:xSiO_2:yH_2O$$

where M designates at least one exchangeable cation, n represents the valence of M, y is any value from 0 to about 9, and x is disclosed as 5.2 to 6.9 in U.S. Patent No. 3,216,789, but may be outside this range provided the x-ray diffraction pattern of the zeolite is the same as zeolite L. Thus, type L zeolites with $SiO_2/Al_2O_3$ ratios less than 5.2 or greater than 6.9 are applicable to this invention. Preferaby, the $SiO_2/Al_2O_3$ ratio may vary between two and about 50. For example, one method of reducing $SiO_2/Al_2O_3$involves leaching some of the $SiO_2$ with an alkali metal hydroxide; e.g., KOH, to produce type L zeolite useful in this invention. A more complete description of zeolite L is provided in U.S. Patent No. 3,216,789.

The type L zeolites are conventionally prepared such that M in the above formula is potassium. See, e.g., U.S. Patent Nos. 3,216,789 and 3,867,512. The potassium can be ion exchanged, as is well known, by treating the zeolite in an aqueous solution containing other cations. It is difficult, however, to exchange more than 75% of the original potassium cations, because some cations occupy sites in the zeolite structure which are nearly inaccessible. At least 75% of the exchangeable cations are selected from lithium, sodium, potassium, rubidium, cesium, calcium, and barium. More preferably, the cation is sodium, potassium, rubidium, or cesium, and most preferably potassium. Optionally, the exchangeable cations may consist of mixtures of the above-named Group IA cations or mixtures of a Group IA cation and barium or calcium cations. These mixtures of cations may be achieved, for example, by treating the zeolite L with an aqueous solution containing a rubidium and/or cesium salt and then washing to remove excess ions. This ion exchange treatment can be repeated to effect further ion exchange, although to a lesser degree.

Preferably, the type L zeolites employed in the present invention are type L zeolites with cylindrical morphology as disclosed in U.S. Patent No. 4,544,539. These preferred zeolites have a characteristic X-ray diffraction pattern obtained from $CuK_\alpha$ radiation with the significant d (Angstroms $10^{-10}$m) values set out in Table B:

**Table B**

| |
|---|
| 16.1 ± 0.4 |
| 7.52 ± 0.05 |
| 6.00 ± 0.04 |
| 4.57 ± 0.04 |
| 4.35 ± 0.04 |
| 3.91 ± 0.02 |
| 3.47 ± 0.02 |
| 3.28 ± 0.02 |
| 3.17 ± 0.02 |
| 3.07 ± 0.02 |
| 2.91 ± 0.02 |
| 2.65 ± 0.02 |
| 2.46 ± 0.02 |
| 2.42 ± 0.01 |
| 2.19 ± 0.01 |

The preferred cylindrical zeolites according to the '539 patent are preferably aluminosilicates and will be described hereinafter in terms of aluminosilicates, though other elemental substitutions are possible; for example; aluminium may be substituted by gallium, boron, iron and similar trivalent elements, and silicon may be substituted by elements such as germanium or phosphorus. The aluminosilicates preferably have a composition (expressed in terms of molar ratios of the constituent oxides in anhydrous forms) of:

$$(0.1\text{-}1.3)\ M_{2/n}O:Al_2O_3:xSiO_2$$

wherein M is a cation of valence n, x is from 5 to 7.5, preferably from about 5.7 to about 7.4, more preferably from about 6 to about 7 and most preferably from about 6.0 to about 6.5. The preferred zeolites have high crystallinity as shown by a well-defined X-ray diffraction pattern (without binder or other diluents present) with sharp peaks.

The exchangeable cation M in the above general formula is very preferably potassium, but it is possible for a part of M to be replaced by other cations such as alkali and alkaline earth metals; for example, sodium, rubidium or cesium. The ratio $M_{2/n}O:Al_2O_3$ is preferably from about 0.95 to about 1.15, and generally above 1.

The aluminosilicate form of the zeolite may be hydrated, typically with from 0 to about 9 moles of water per mole of $Al_2O_3$. When used as a catalyst base, as described hereinafter, the zeolite is preferably first

calcined to remove water. In normal preparation from aqueous gels a hydrated form is first prepared and this may be dehydrated by heating.

Scanning electron micrographs (SEM) of the preferred zeolites show these to have very distinct crystal morphology. Preferred zeolites appear as distinct cylinders in scanning electron micrographs. The terms "cylinder" and "cylindrical" are used herein to describe particles having substantially the shape of a cylinder as defined in solid geometry --that is, a solid bounded by a surface generated by a line moving parallel to a fixed line so as to cut a fixed polane curve and by two parallel lines (bases) which cut the surface. The use of these terms is not intended to exclude particles having generally cylindrical form but having minor surface irregularities or displaying typical crystallographic faults or dislocations. The cylindrical particles are preferably substantially in the form of circular cylinders and most preferably substantially in the form of right circular cylinders. Particularly preferred cylindrical particles are those having an aspect ratio (the length of the cylinder surface to the diameter of the cylinder) of at least 0.5. Particles having a lower aspect ratio are also described as discs where they have substantially flat basal planes. The aluminosilicate zeolites are preferably characterized by at least about 50%, more preferably about 70%, and most preferably about 85% of the crystallites being cylinders. The aspect ratio of the cylindrical crystallites is preferably from about 0.5 to about 1.5.

The mean diameter of the preferred zeolite cylinders or crystallites is at least about 0.1 μm, preferably at least about 0.5 μm, more preferably from about 0.5 to about 4 μm, and most preferably from about 1.0 to about 3.0 μm. Preferably substantially all the cylindrical particles of zeolite fall within the range of from 0.5 to 4 μm.

The zeolite with cylindrical morphology may be prepared by controlling the composition of the reaction mixture used to prepare the zeolite within certain limits, depending upon the aspect ratio required. In preparing the preferred zeolites, an alkaline reaction mixture comprising water, a source of silicon and a source of aluminum with a composition falling within the following molar ratios (expressed as oxides):

$$M_2/SiO_2: 0.22-0.36$$

$$H_2O/M_2O: 25-90$$

$$SiO_2/Al_2O_3: 6-15$$

(wherein M is a cation of valence n, and preferably potassium or a mixture of K + M′ in which M′ is an alkali metal or alkaline earth metal such as sodium, calcium, barium, or rubidium, provided that $K_2O/(M'_2O + K_2O)$ is at least 0.7) is heated to a temperature of from at least 75° C and preferably from about 100 to about 250° C, more preferably from about 120 to about 225° C, to form the desired cylindrical aluminosilicate.

The ratio of $H_2O/(K_2O + M'_2O + SiO_2 + Al_2O_3)$ is preferably greater than 6 and most preferably greater than 8.

Preferred zeolites may be obtained within the following preferred ranges:

$$K_2O/SiO_2: 0.24-0.30$$

$$H_2O/K_2O: 35-65$$

$$SiO_2/Al_2O_3: 8-12$$

In particular, an optimum composition for a process in which the reaction mixture is heated to from about 120 to about 225° C has been found to be substantially in the following mole ratios:

$$2.62\ K_2O: Al_2O_3: 10\ SiO_2: 160\ H_2O$$

Particle size is also affected by the composition of the reaction mixture; larger particle sizes are favored by each of lower alkalinity, higher dilution and higher temperatures. The crystallization is preferably carried out in the region of 150°C for about 24 to 96 hours, typically from 48 to 72 hours. The crystallization is generally carried out in a sealed autoclave and thus at autogenous pressure. It is possible to employ higher pressures. Lower pressure will require longer crystallization times. Following the preparation as described above, the aluminosilicate or zeolite may be separated, washed and dried in the normal manner.

The preferred oylindrical zeolite L, metal-containing catalyst, as employed in the present invention, is made by loading metal or metals such as one or more Group VIII metals into the pores of the zeolite. The Group VIII metal may be selected from the group consisting of nickel, ruthenium, rhodium, iridium, palladium, platinum and combinations thereof. Preferably, the metal is or includes platinum, typically about 0.3 to about 1.5% platinum by weight based on the weight of the zeolite, and is loaded into the zeolite by a process as disclosed in U.S. Patent No. 4,568,656, the disclosure of which is incorporated by reference herein.

More generally, the Group VIII noble metals which are necessary for catalytic activity are those metals from Group VIII of the Periodic Table of Elements which are selected from osmium, ruthenium, rhodium, iridium, palladium and platinum. Preferably, the metals which are employed herein are platinum, rhodium or iridium, and most preferably platinum. The metals may be present in any combination desired. Rhenium, a Group VIIB metal, may also be present so long as at least one Group VIII noble metal is present. The amount of Group VIII noble metal present in the catalyst will be an effective amount and will depend, for example, on required catalyst activity, ease of uniform dispersion, and the crystal size of the type L zeolite. Crystal size limits the effective catalyst loading since highly loaded crystals of zeolite which have a large dimension parallel to the channels could easily lead to pore plugging during operation as the noble metal agglomerates inside the channels. Generally, however, the level of metal present will range from about 0.1 to 6% by weight of the catalyst, preferably 0.1 to 3.5%, and more preferably 0.1 to 2.5%. Furthermore, the amount of metal present is generally from 0.1 to 2.0% by weight of the catalyst, if the average zeolite crystallize size parallel to the channels is greater than about 0.2 μm, and from about 1.0 to 6% by weight if the average zeolite crystallite size parallel to the channels is no greater than about 0.2 μm.

The invention is further illustrated by the following examples which are not to be considered as limitative of its scope.

Example 1

A type L zeolite was blended with a boehmitic alumina and acidic alumina sol to provide a catalyst substrate consisting of 71.8 wt.% zeolite L, 6.7 wt.% boehmitic alumina and 21.5 wt.% alumina from an alumina sol, all percentages on an anhydrous basis.

The substrate was prepared by blending the boehmite and alumina sol (20% by weight alumina, 20 mμm particle size, pH = 4.0, viscosity = 10 cps g/cm $S.10^2$) in a high intensity blender for five minutes. The required amount of potassium type L zeolite, as defined in Example 1 of U.S. Patent No. 4,544,539, made from a synthesis gel of the formula 2.62 $K_2O$:$Al_2O_3$:10 $SiO_2$:160 $H_2O$ and comprising cylindrical crystallites, was added to the binder admixture with stirring in a Hobart low intensity mixer at low speed over a five minute period and mixing was continued at medium speed for 10-20 minutes. The zeolite-binder mixture was dried in an oven at 120°C until the moisture content was reduced to 35-40%. The dried cake was mixed in a high intensity solids mixture and then extruded through a 0.158 cm (1/16 inch) die and the extruded particles were dried at 120°C for one hour and calcined in a muffle furnace for three hours at 500°C. Platinum was added to the catalyst extrudate according to the procedure of U.S. Patent No. 3,568,656 to provide a catalyst containing 0.6 wt.% platinum.

Example 2

Another platinum type L zeolite catalyst was prepared according to the procedure of Example 1 except that the substrate contained 3.4 wt.% boehmitic alumina and 24.8% alumina from the acidic sol.

Example 3

Another platinum type L zeolite catalyst was prepared according to the procedure of Example 1 except

that the substrate contained 21.5% boehmitic alumina and 6.7% alumina from the acidic sol.

Example 4

Performance testing in the reforming process was conducted with these catalysts by conducting aromatization of a feedstock composed of 100 wt.% 3-methylpentane at 510° C with a $H_2$:feedstock ratio of 6:1, a weight hourly space velocity of 20 and 689.5 KPa (100 psig).

Results are given below in Table 1, the table reporting benzene yield and selectivity for process runs conducted over 30 hour periods on both fresh and redispersed catalyst. Three separate preparations of Example 1 catalyst were made and tested. Redispersed catalyst is prepared by subjecting the catalyst to wet coke burn at high temperatures of about 430 to 540° C and conducting the oxychlorination procedure as disclosed in U.S. Serial No. 550,902 (filed November 10, 1983) to redisperse the platinum into the catalyst. These are procedures which would be conducted in regenerating the catalyst.

**Table 1**

| | Fresh Catalyst | |
|---|---|---|
| Catalyst | Benzene Yield | Selectivity |
| Ex. 1 (2 run average) | 22.6% | 63.9% |
| Ex. 1 (2 run average) | 21.6% | 60.1% |
| Ex. 1 | 20.0% | 60.7% |
| Ex. 2 | 25.2% | 66.4% |
| Ex. 3 (2 run average) | 20.8% | 62.7% |

| | Redispersed Catalyst | |
|---|---|---|
| Catalyst | Benzene Yield | Selectivity |
| Ex. 1 (2 run average) | 29.2% | 68.0% (2 run average) |
| Ex. 1 (2 run average) | 31.4% | 66.9% (2 run average) |
| Ex. 1 | 29.4% | 66.1% |
| Ex. 2 | 27.6% | 66.4% |
| Ex. 3 (2 run average) | 26.4% | 64.2% |

The preferred catalyst of Example 1 provides a highly significant benzene yield improvement on redispersion averaging 8.6% for the three runs listed. These results indicate that upon regeneration of the catalyst, its activity is increased.

Example 5

For comparative purposes, catalysts were prepared and evaluated utilizing a binder --zeolite L composed of 28% acidic alumina sol and no boehmite (Catalyst A), a binder-zeolite composed of 25% boehmite and no sol (Catalyst B). Otherwise, these catalysts were prepared in the manner of Example 1 and were tested with the catalysts of Examples 1, 2 and 3. Results are given in Table 2 below. Crush strength is kg per millimeter (ASTM D4179-827), attritition resistance is ASTM D4058-81, and wt.% and

hexane adsorption is wt.% on zeolite.

The catalysts of the invention, Examples 1, 2 and 3, and in particular the catalyst of Example 1, show superior properties, especially high initial yields for benzene and greatly improved yields upon redispersion of the platinum.

## Table 2

| Catalyst | Benzene Yield, 30 hours Fresh | Benzene Yield, 30 hours Redispersed | Crush Strength | Attrition | $C_6$ Absorption |
|---|---|---|---|---|---|
| Ex. 1 | 22% | 31% | 0.54-0.64 | 2.7-3.1 | 5.7-7.0 |
| Ex. 2 | 25% | 27% | <0.45 | 3.2 | 6.4 |
| Ex. 3 | 21% | 26% | <0.54 | 3.4 | 6.9 |
| A | 20% | 23% | <0.45 | 3.8 | 5.4 |
| B | 19% | 25% | 0.64 | 2.3-2.7 | 6.5 |

## Claims

1. A catalyst composition comprising a catalytically-active Group VIII metal dispersed on an extruded catalyst substrate comprising a type L zeolite and a two-component alumina binder for the zeolite, the binder being prepared by mixing boehmitic alumina and an acidic alumina sol, the binder being present in an amount of from 15 to 35 wt.% by weight of the substrate, the boehmitic alumina comprising from 3 to 21 wt.% of said substrate and the sol comprising 6 to 25 wt.% of said substrate, said percentages being percent alumina on an anhydrous basis.

2. A composition according to claim 1 wherein the Group VIII metal is platinum which is present in an amount of from 0.3 to 1.5 wt.% based on the total weight of the catalyst composition.

3. A composition according to claim 1 or claim 2 wherein the type L zeolite has an X-ray diffraction pattern obtained from $CuK_\alpha$ radiation with significant d values set out in Table B

| Table B |
|---|
| 16.1 ± 0.4 |
| 7.52 ± 0.05 |
| 6.00 ± 0.04 |
| 4.57 ± 0.04 |
| 4.35 ± 0.04 |
| 3.91 ± 0.02 |
| 3.47 ± 0.02 |
| 3.28 ± 0.02 |
| 3.17 ± 0.02 |
| 3.07 ± 0.02 |
| 2.91 ± 0.02 |
| 2.65 ± 0.02 |
| 2.46 ± 0.02 |
| 2.42 ± 0.01 |
| 2.19 ± 0.01 |

and comprising highly crystalline crystallites having at least 50% of the crystallites in the form of distinct circular cylinders with an aspect ratio of at least 0.5 and a mean diameter of at least 0.5 μm.

4. A composition according to claim 3 wherein at least 70% of the crystallites are in the form of distinct circular cylinders.

5. A composition according to any of claims 1 to 4 wherein the zeolite is in the potassium form.

6. A composition according to claim 5 wherein the zeolite is prepared from a composition falling within the following molar ratios:

| | |
|---|---|
| $K_2O/SiO_2$: | 0.24-0.30 |
| $H_2O/K_2O$: | 35-65 |
| $SiO_2/Al_2O_3$: | 8-12 |

7. A composition according to claim 6 wherein the zeolite is prepared from a reaction mixture having the following molar ratios: 2.62 $K_2O$:$Al_2O_3$:10 $SiO_2$:160 $H_2O$ .

8. A composition according to any of claims 1 to 7 wherein the boehmitic alumina is present in an amount of from 6 to 8 wt.% and the acidic alumina sol in an amount of from 20 to 22 wt. %.

9. A composition according to claim 1 wherein the binder is present in an amount of from 25 to 30% by weight of the substrate.

10. The use of a composition as claimed in any of claims 1 to 9 in the production of reformates from naphtha streams or in the production of aromatic compounds by aromatization.

## Revendications

1. Composition de catalyseur comprenant un métal catalytiquement actif du Groupe VIII dispersé sur un substrat de catalyseur extrudé comprenant une zéolite de type L et un liant à base d'alumine à deux constituants pour la zéolite, le liant étant préparé par mélange d'alumine boehmitique et d'un sol d'alumine acide, le liant étant présent en une quantité de 15 à 35% en poids, sur la base du poids du substrat, l'alumine boehmitique représentant 3 à 21% en poids dudit substrat et le sol représentant 6 à 25% en poids dudit substrat, lesdits pourcentages étant des pourcentages d'alumine sur base anhydre.

2. Composition suivant la revendication 1, dans laquelle le métal du Groupe VIII est le platine, qui est présent en une quantité de 0,3 à 1,5% en poids, sur la base du poids total de la composition de catalyseur.

3. Composition suivant la revendication 1 ou la revendication 2, dans laquelle la zéolite de type L possède un diagramme de diffraction des rayons X obtenu à partir de la radiation de CuKα avec les valeurs d significatives indiquées sur le tableau B

| TABLEAU B |
|---|
| 16,1 ± 0,4 |
| 7,52 ± 0,05 |
| 6,00 ± 0,04 |
| 4,57 ± 0,04 |
| 4,35 ± 0,04 |
| 3,91 ± 0,02 |
| 3,47 ± 0,02 |
| 3,28 ± 0,02 |
| 3,17 ± 0,02 |
| 3,07 ± 0,02 |
| 2,91 ± 0,02 |
| 2,65 ± 0,02 |
| 2,46 ± 0,02 |
| 2,42 ± 0,01 |
| 2,19 ± 0,01 |

et comprenant des cristallites de forte cristallinité, au moins 50% des cristallites étant sous forme de cylindres circulaires distincts ayant un rapport d'allongement d'au moins 0,5 et un diamètre moyen d'au moins 0,5 μm.

4. Composition suivant la revendication 3, dans laquelle au moins 70% des cristallites sont sous forme de cylindres circulaires distincts.

5. Composition suivant l'une quelconque des revendications 1 à 4, dans laquelle la zéolite est sous forme potassique.

6. Composition suivant la revendication 5, dans laquelle la zéolite est préparée à partir d'une composition comprise dans les intervalles de rapports molaires suivants:

| | |
|---|---|
| $K_2O/SiO_2$ : | 0,24-0,30 |
| $H_2O/K_2O$ : | 35-65 |
| $SiO_2/Al_2O_3$ : | 8-12 |

7. Composition suivant la revendication 6, dans laquelle la zéolite est préparée à partir d'un mélange réactionnel correspondant aux rapports molaires suivants: 2,62 $K_2O$:$Al_2O_3$:10 $SiO_2$:160 $H_2O$ .

8. Composition suivant l'une quelconque des revendications 1 à 7, dans laquelle l'alumine boehmitique est présente en une quantité de 6 à 8% en poids et le sol d'alumine acide en une quantité de 20 à 22% en poids.

9. Composition suivant la revendication 1, dans laquelle le liant est présent en une quantité de 25 à 30% en poids du substrat.

10. Utilisation d'une composition suivant l'une quelconque des revendications 1 à 9 dans la production de reformats à partir de courants de naphtas ou dans la production de composés aromatiques par aromatisation.

**Ansprüche**

1. Katalysatorzusammensetzung enthaltend ein katalytisch aktives Metall der Gruppe VIII, das auf einem extrudierten Katalysatorsubstrat dispergiert ist, das einen L-Zeolith-Typ und einen Zweikomponentenaluminiumoxidbinder für den Zeolith enthält, wobei der Binder durch Mischen von Boehmitaluminiumoxid und einem sauren Aluminiumsol hergestellt wird, der Binder in einer Menge von 15 bis 35 Gew.-% des Substrates vorhanden ist, das Boehmitaluminiumoxid 3 bis 21 Gew.-% des Substrates enthält, und das Sol 6 bis 25 Gew.-% des Substrates enthält, wobei die Prozentangaben sich auf Aluminiumoxid auf wasserfreier Basis beziehen.

2. Zusammensetzung nach Anspruch 1, in der das Gruppe-VIII-Metall Platin ist, das in einer Menge von 0,3 bis 1,5 Gew.-%, bezogen auf das Gesamtgewicht der Katalysatorzusammensetzung, vorhanden ist.

3. Zusammensetzung nach Anspruch 1 oder 2, in der der L-Zeolith-Typ ein Röntgenbeugungsmuster, erhalten aus CuKα-Bestrahlung mit signifikanten d-Werten, dargestellt in Tabelle B,

<u>Tabelle B</u>

$16,1 \pm 0,4$

$7,52 \pm 0,05$

$6,00 \pm 0,04$

$4,57 \pm 0,04$

$4,35 \pm 0,04$
$3,91 \pm 0,02$
$3,47 \pm 0,02$
$3,28 \pm 0,02$
$3,17 \pm 0,02$
$3,07 \pm 0,02$
$2,91 \pm 0,02$
$2,65 \pm 0,02$
$2,46 \pm 0,02$
$2,42 \pm 0,01$
$2,19 \pm 0,01$

aufweist, und hochkristalline Kristallite mit mindestens 50 % der Kristallite in Form von eindeutigen kreisförmigen Zylindern mit einem Längenverhältnis von mindestens 0,5 und einem mittleren Durchmesser von mindestens 0,5 µm enthält.

**4.** Zusammensetzung nach Anspruch 3, in der mindestens 70 % der Kristallite in Form von eindeutigen kreisförmigen Zylindern vorliegen.

**5.** Zusammensetzung nach einem der Ansprüche 1 bis 4, in der der Zeolith in der Kaliumform vorliegt.

**6.** Zusammensetzung nach Anspruch 5, in der der Zeolith aus einer Zusammensetzung hergestellt wird, die innerhalb der folgenden molaren Verhältnisse liegt:

| | |
|---|---|
| $K_2O/SiO_2$: | 0,24 - 0,30 |
| $H_2O/K_2O$: | 35 - 65 |
| $SiO_2/Al_2O_3$: | 8 - 12 |

**7.** Zusammensetzung nach Anspruch 6, in der der Zeolith aus einer Reaktionsmischung mit den folgenden molaren Verhältnissen hergestellt wird: 2,62 $K_2O$ : $Al_2O_3$ : 10 $SiO_2$ : 160 $H_2O$ .

**8.** Zusammensetzung nach einem der Ansprüche 1 bis 7, in der das Boehmitaluminiumoxid in einer Menge von 6 bis 8 Gew.-% und das saure Aluminiumoxidsol in einer Menge von 20 bis 22 Gew.-% vorhanden ist.

**9.** Zusammensetzung nach Anspruch 1, bei dem der Binder in einer Menge von 25 bis 30 Gew.-% des Substrates vorhanden ist.

**10.** Verwendung einer Zusammensetzung nach einem der Ansprüche 1 bis 9 bei der Herstellung von Reformaten von Naphthaströmen oder bei der Herstellung von aromatischen Verbindungen durch Aromatisation.